# EUROPEAN PATENT APPLICATION

(11) **EP 4 220 776 A1**
(43) Date of publication of application: **02.08.2023**
(21) Application number: 23152015.6
(22) Date of filing: 17.01.2023
(51) Int. Cl.: H01M 4/64, C25D 1/04, C25D 3/38

(54) **ELECTRODEPOSITED COPPER FOIL AND METHOD FOR PRODUCING SAME**

(30) Priority: 28.01.2022 LU 501353
(71) Applicant: Circuit Foil Luxembourg, 9559 Wiltz (LU)
(72) Inventor: DEVAHIF, Thomas, Wiltz (LU); STREEL, Michel, Wiltz (LU)
(74) Representative: Office Freylinger

(57) **Abstract**

The present invention provides an electrodeposited copper foil suitable for a lithium-ion secondary battery, in which a tensile strength in an ordinary state is 50 kgf/mm² or more and a tensile strength after continuous heat treatment at 190°C for 24 hours is 35 to 30 kgf/mm², wherein a sulfur content is 10 ppm by mass or more and less than 30 ppm by mass. Also provided is a method for producing the electrodeposited copper foil, wherein the method comprises performing electrolytic treatment with a copper sulfate-based electrolyte containing 1 to 2 ppm of gelatin having an average molecular weight of 80,000 to 120,000 g/mol.

## Description

### [Technical Field]

The present invention relates to an electrodeposited copper foil, and particularly relates to an electrodeposited copper foil suitable for a secondary battery.

### [Background Art]

In recent years, electrodeposited copper foils have been widely used in conductive portions of printed wiring boards, negative electrode current collectors of lithium-ion secondary batteries, and the like used in various electronic devices such as electronic communication devices. As the products have been made thinner and smaller, electrodeposited copper foils which can be easily reduced in thickness and produced at a lower cost as compared with rolled copper foils are considered to be particularly effective.

The electrodeposited copper foil used has physical property values in accordance with various applications. For example, in the case of a lithium-ion secondary battery, an electrodeposited copper foil having physical property values sufficient to ensure the stress load during the production of the battery is needed. Specifically, an electrodeposited copper foil having physical property values of a tensile strength and an elongation of a predetermined value or more is required (Patent Literatures 1 to 3).

### [Citation List]

### [Patent Literature]

[Patent Literature 1] Japanese Patent Application Laid-Open No. 2009-221592
[Patent Literature 2] Japanese Patent Application Laid-Open No. 2012-212529
[Patent Literature 3] Japanese Patent Application Laid-Open No. 2006-152420

The electrodeposited copper foil for a secondary battery suitably has a relatively high strength, that is, a a high physical property value for tensile strength, from the viewpoint of the stress load and the handleability during production. In the production of a lithium-ion secondary battery, a carbon-based material that is called an active substance is applied on the surface of the copper foil. A copper foil having a high tensile strength hardly causes wrinkles and the like on the copper foil and can maintain stable production. Then, the copper foil is subjected to heat treatment after the application of the active substance, and in this heat treatment, a copper foil having a relatively high elongation rate is required. The reason is that, since in a cylindrical lithium-ion secondary battery, the expansion and contraction of the active substance in the battery are repeated during charging and discharging, a copper foil having a high elongation rate can follow the stress change caused by expansion and contraction and hardly causes deformation such as wrinkles and fracture. That is, in the production of the lithium-ion secondary battery, an electrodeposited copper foil having a relatively high tensile strength in the application step of the active substance in which handleability is required and exhibiting a relatively low tensile strength value and a high elongation rate after heat treatment performed in a subsequent step is desired. Specifically, an electrodeposited copper foil exhibiting such physical properties that the tensile strength in a normal state is 50 kgf/mm² or more and the tensile strength after predetermined continuous heat treatment is 30 kgf/mm² or more is desired in the present circumstances.

### [Summary of Invention]

### [Technical Problem]

An object of the present invention is to provide an electrodeposited copper foil suitable for a lithium-ion secondary battery, having such physical properties that the tensile strength in a normal state is 50 kgf/mm² or more and the tensile strength after predetermined heat treatment is 30 kgf/mm² or more.

### [Means of Solving the Problems]

The present invention relates to an electrodeposited copper foil, which has a tensile strength in a normal state (or in an ordinary state) of 50 kgf/mm² or more and of 35 to 30 kgf/mm² after being continuously heat-treated at 190°C for 24 hours. In the present invention, the "normal state" or "ordinary state" may be used as synonym of each other and independently from one another. As defined herein, the "normal state" and the "ordinary state" each refers to a state controlled at ambient temperature, or a state before subjected to heat treatment. In other words, a copper foil in a normal state, or a copper foil in an ordinary state, refers to a copper foil as produced, directly after its production or after having been stored at room temperature, and which has not been submitted to heat treatment.

The electrodeposited copper foil having a tensile strength of 50 kgf/mm² or more in the normal state can avoid troubles such as wrinkles in a step that requires handleability, such as the application of an active substance. The electrodeposited copper foil having a tensile strength after continuous heat treatment at 190°C for 24 hours of 35 to 30 kgf/mm² can follow the expansion and contraction of the active substance in the battery caused during charging and discharging in a lithium-ion secondary battery, hardly causes fracture and the like, and thus can achieve a lithium-ion secondary battery that can be stably used for a long period of time. Then, the thickness of the electrodeposited copper foil is preferably 4 to 12 µm.

Moreover, the electrodeposited copper foil according to the present invention has a sulfur content of 10 ppm by mass or more and less than 30 ppm by mass. With a sulfur content less than 10 ppm by mass, the copper foil tends to have a crystal structure liable to cause coarsening of crystal grains. With a sulfur content 30 ppm by mass or more, physical properties of the copper foil tend to be unstable, for example, the copper foil is likely to fracture when elongated.

The copper foil for a battery of the present invention can be produced by performing electrolytic treatment with a copper sulfate-based electrolyte containing 1 to 2 ppm of gelatin having an average molecular weight of 80,000 to 120,000 g/mol. When the electrolytic treatment is performed with a copper sulfate-based electrolyte containing 1 to 2 ppm of gelatin having an average molecular weight of 80,000 to 120,000 g/mol, the sulfur content of the electrodeposited copper foil becomes 10 ppm by mass or more. Then, this production method can achieve an electrodeposited copper foil having a tensile strength in the normal state of 50 kgf/mm² or more and a tensile strength after continuous heat treatment at 190°C for 24 hours of 35 to 30 kgf/mm². This is because when the amount of gelatin added is less than 1 ppm, the tensile strength tends to be less than 30 kgf/mm² after continuous heat treatment at 190°C for 24 hours, and when the amount of gelatin added exceeds 2 ppm, the sulfur content of the electrodeposited copper foil becomes 30 ppm by mass or more, and thus physical properties of the electrodeposited copper foil tend to be unstable. Noted that, the "average molecular weight" refers to the weight average molecular weight, in the present invention. Moreover, when the gelatin has an average molecular weight of less than 80,000 g/mol, the long-term thermal stability of the foil (after heating at 190 C for 24 hours) is reduced, and when the gelatin has an average molecular weight of more than 120,000 g/mol, structural defects on the surface of the foil (such as e.g. pinholes, craters,...) appear.

In the production method of the electrodeposited copper foil of the present invention, a copper sulfate solution is used as the electrolyte. The conditions of the basic solution composition are preferably such that the copper concentration of the copper sulfate solution is 70 to 100 g/l, free sulfuric acid is 50 to 200 g/l, the solution temperature is 30 to 70°C, and the current density is 40 to 70 A/dm². The chlorine concentration contained in the copper sulfate solution is preferably 2 ppm or less.

### [Advantageous Effects of Invention]

The electrodeposited copper foil according to the present invention hardly causes wrinkles and the like in the application step of the carbon-based active substance, can maintain stable production, can follow the stress change caused by repeating of the expansion and contraction of the active substance in the battery during charging and discharging, and hardly causes deformation such as wrinkles, fracture and the like, and therefore, can achieve a lithium-ion secondary battery that can be stably used for a long period of time.

### [Brief Description of Drawings]

[Figure 1A] Figure 1A shows a cross-sectional observation photograph of the copper foil of Example (normal state);
[Figure 1B] Figure 1B shows a cross-sectional observation photograph of the copper foil of Example (after heat treatment);
[Figure 2A] Figure 2A shows a cross-sectional observation photograph of the copper foil of Comparative Example (normal state); and
[Figure 2B] Figure 2B shows a cross-sectional observation photograph of the copper foil of Comparative Example (after heat treatment)

### [Description of Embodiments]

An embodiment of the present invention will be described below.

### [Example]

As Example, an electrodeposited copper foil was produced under the following conditions.
• Copper sulfate solution

| | |
|---|---|
| Copper concentration | 80 ± 5 g/L |
| Free sulfuric acid | 90 ± 10 g/L |
| Chlorine | 2.5 ppm |
| Gelatin | 1.5 ppm |
| (Average molecular weight: 100,000) | |

| | |
|---|---|
| • Solution temperature | 50 ± 5°C |
| • Current density | 45 + 5 A/dm² |
| • Copper foil thickness | 8 µm |

### [Comparative Example]

For comparison, an electrodeposited copper foil was produced with a copper sulfate solution in which no gelatin was added. The conditions were the same as those of Example except that no gelatin was added.

The tensile strength and the elongation rate were measured for the electrodeposited copper foils produced. The measurement method was in accordance with IPC-TM-650. Measurements were made for the electrodeposited copper foils in a normal state (20°C) and after having been subjected to heat treatment at 190°C for each predetermined time. Measurement results are shown in Table 1.

| [Table 1] | Example | | Comparative Example | |
|---|---|---|---|---|
| | Tensile strength (kgf/mm²) | Elongation rate (%) | Tensile strength (kgf/mm²) | Elongation rate (%) |
| Ordinary state | 53.0 | 6 | 30.0 | 12 |
| 190°C, 1 hr | 48.8 | 7 | 25.9 | 11 |
| 190°C, 5 hr | 47.3 | 7 | 25.2 | 13 |
| 190°C, 10 hr | 43.5 | 9 | 24.5 | 13 |
| 190°C, 15 hr | 38.8 | 9 | 23.9 | 14 |
| 190°C, 24 hr | 32.8 | 11 | 22.1 | 15 |

As shown in Table 1, the tensile strength of the electrodeposited copper foil of Example was 53.0 kgf/mm² in the normal state and 32.8 kgf/mm² after continuous heat treatment at 190°C for 24 hours. This revealed that, with the electrodeposited copper foil of Example, the tensile strength after continuous heat treatment at 190°C for 24 hours decreased by 38.1% as compared with the tensile strength in the normal state. In the case of Example, the tensile strength did not greatly decrease after heat treatment at 190°C for 1 hour and it was found that the tensile strength gradually decreased as the heat treatment time passed. On the other hand, for the electrodeposited copper foil of Comparative Example, the elongation rate exceeded 10% even in the normal state and the tensile strength decreased by heat treatment at 190°C for 1 hour. The tensile strength after heat treatment for 24 hours was 22.1 kgf/mm², which is less than 30 kgf/mm², and was found to decrease by 26.3% as compared with the tensile strength in the normal state.

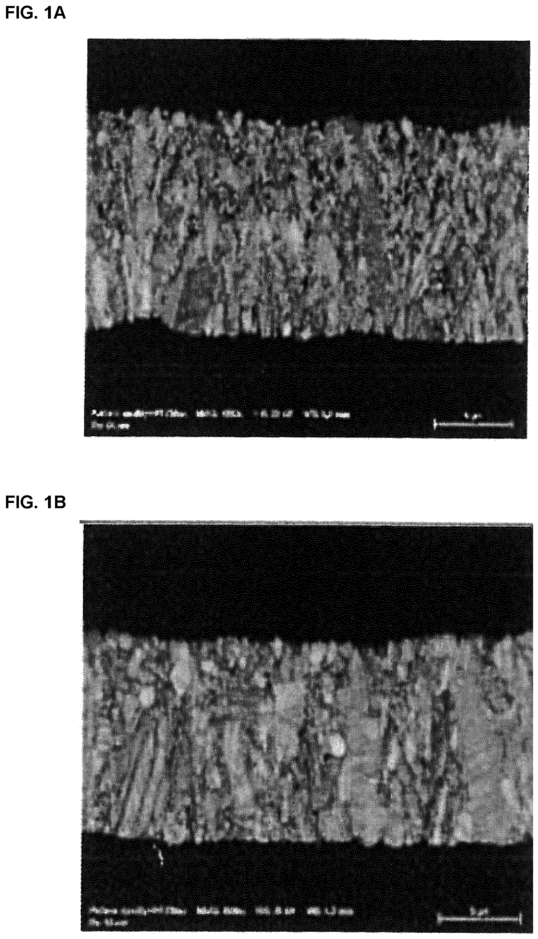

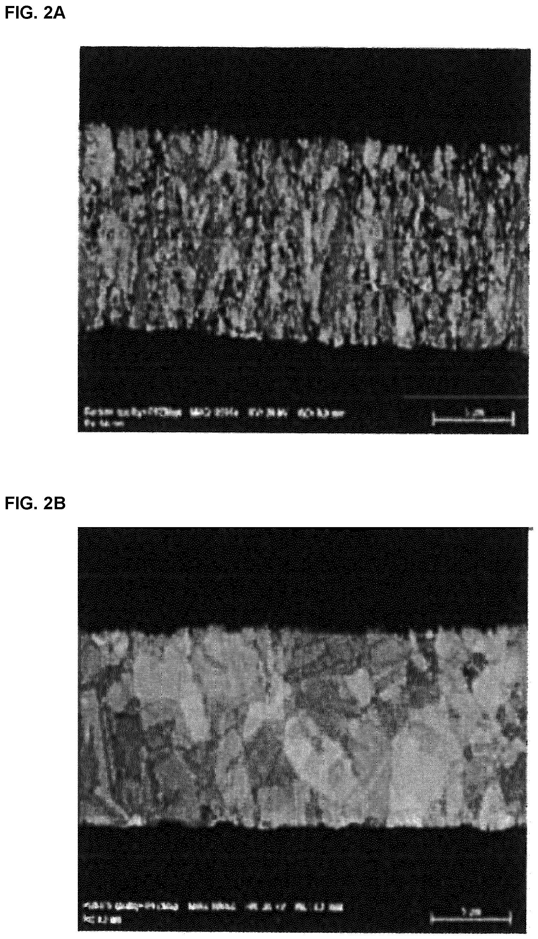

Next, the observation results of the cross-sectional structures of the respective electrodeposited copper foils will be described. Figure 1A shows the cross-sectional observation photograph of Example in the normal state, and Figure 1B shows the cross-sectional observation photograph of Example after continuous heat treatment at 190°C for 24 hours. Figure 2A and Figure 2B show the cases of Comparative Example in the same manner.

As shown in Figure 1B, crystal grain growth was slightly observed in the electrodeposited copper foil of Example after continuous heat treatment was performed at 190°C for 24 hours, but no crystal grain growth which may result in coarse crystal grains was observed. On the other hand, as shown in Figure 2B, crystal grains were grown to be coarse crystal grains in the electrodeposited copper foil of Comparative Example after continuous heat treatment was performed at 190°C for 24 hours.

Finally, the sulfur content in the electrodeposited copper foil was measured for the electrodeposited copper foils of Example and Comparative Example by secondary ion mass spectroscopy (SIMS), and as a result, the sulfur content was 0.1 ppm by mass or less when the copper foil electrolyte containing no gelatin was used, whereas it was 14 ppm by mass in the copper foil electrolyte when gelatin having an average molecular weight of 100,000 was used. It is deemed that this sulfur content is affected by the use of the gelatin having an average molecular weight of 100,000. Moreover, it is assumed from the cross-sectional structure observation that the sulfur content in the copper foil increases by using the gelatin having an average molecular weight of 100,000, and this controls the electrodeposited copper foil structure so as not to be a crystal structure that causes coarsening of crystal grains by continuous heat treatment at 190°C for 24 hours.

## Claims

1. An electrodeposited copper foil, wherein a tensile strength of the copper foil is 50 kgf/mm² or more in a normal state and 30 kgf/mm² or more after being continuously heat-treated at 190°C for 24 hours, wherein a sulfur content is 10 ppm by mass or more and less than 30 ppm by mass.

2. A method for producing the electrodeposited copper foil defined in claim 1, wherein the method comprises performing electrolytic treatment with a copper sulfate-based electrolyte containing 1 to 2 ppm of gelatin having an average molecular weight of 80,000 to 120,000 g/mol.
